# EUROPÄISCHE PATENTSCHRIFT

(11) **EP 3 829 793 B1**
(45) Veröffentlichungstag und Bekanntmachung des Hinweises auf die Patenterteilung: **24.08.2022**
(21) Anmeldenummer: 19765634.1
(22) Anmeldetag: 30.07.2019
(51) Int. Cl.: B21D 5/00, B21D 5/02, B21D 55/00, B30B 15/28, F16P 3/14

(54) **VERFAHREN ZUM BETREIBEN EINER BIEGEPRESSE**
METHOD FOR OPERATING A PRESS BRAKE
PROCÉDÉ DE FONCTIONNEMENT D'UNE PRESSE PLIEUSE

(30) Priorität: 31.07.2018 AT 506672018
(43) Veröffentlichungstag der Anmeldung: 09.06.2021
(73) Patentinhaber: TRUMPF Maschinen Austria GmbH & Co. KG., 4061 Pasching (AT)
(72) Erfinder: DENKMEIER, Thomas, 4050 Traun (AT); SIMMEL, Peter, 4174 Niederwaldkirchen (AT); HAIM, David, 4062 Thening (AT)
(74) Vertreter: Burger, Hannes
(86) Internationale Anmeldenummer: PCT/AT2019/060247
(87) Internationale Veröffentlichungsnummer: WO 2020/023988

(56) Entgegenhaltungen:
- DE-A1- 19 717 299
- DE-U1-202007 002 078

## Beschreibung

Die Erfindung betrifft ein Verfahren zum Betreiben einer Biegepresse, insbesondere Abkantpresse, wobei die Biegepresse
- eine erste Plattform mit einer ersten Werkzeughalterung und eine zweite Plattform mit einer zweiten Werkzeughalterung, wobei eine der Plattformen zur Ausführung einer Arbeitsbewegung relativ zur anderen Plattform bewegbar ist,
- eine Sicherheitseinrichtung zum Erzeugen einer zwischen den Werkzeughalterungen quer zur Arbeitsbewegung der bewegbaren Plattform verlaufenden Lichtschranke, insbesondere Laserlichtschranke, welche im Querschnitt ein Lichtfeld bildet, wobei die Sicherheitseinrichtung eine erste Halterung, die einen Lichtsender zum Erzeugen der Lichtschranke trägt, und eine zweite Halterung, die einen Lichtempfänger zum Empfangen des Lichtes der Lichtschranke trägt, aufweist, und wobei die erste Halterung an einer ersten Seite der ersten Plattform angeordnet ist und durch einen ersten Verstellantrieb relativ zur ersten Plattform derart verstellbar ist, dass die Position der Lichtschranke relativ zur ersten Werkzeughalterung in Richtung der Arbeitsbewegung der bewegbaren Plattform veränderbar ist,
- eine Steuereinrichtung, die mit dem ersten Verstellantrieb verbunden ist umfasst. Die Erfindung bezieht sich auch auf eine Biegepresse zur Durchführung des Verfahrens.

Um vorgeschriebenen Sicherheitserfordernissen zu genügen, sind Biegepressen mit Sicherheitseinrichtungen ausgestattet, die unerwünschte Kollisionen eines Biegewerkzeuges mit einem Objekt oder das Einklemmen eines Fingers oder einer Hand einer Bedienperson zwischen Biegewerkzeugen oder zwischen einem Biegewerkzeug und dem zu biegenden Werkstück verhindern sollen. Sicherheitseinrichtungen in Form von Lichtschranken weisen jeweils seitlich des Pressbalkens Halterungen für einen Lichtsender bzw. einen Lichtempfänger auf

Die Halterungen sind dabei verstellbar, wodurch eine automatische und flexible Positionierung der Lichtschranke jeweils in Abhängigkeit des verwendeten Biegewerkzeuges ermöglicht wird. Aus dem Stand der Technik ist hierzu bekannt, dass von einer Bedienperson die Werkzeughöhe über eine Benutzerschnittstelle der Biegepresse eingegeben wird und dass aus der Werkzeughöhe automatisch die Soll-Position für die Lichtschranke errechnet wird.

Die DE19717299A1 offenbart eine Schutzeinrichtung für Maschinen, bei denen ein erstes Maschinenteil Arbeitsbewegungen gegen ein zweites Maschinenteil ausführt. Eine Lichtschranke ist zwischen den Maschinenteilen an einem derselben so positionierbar, dass ihr Licht-Strahl einen Sicherheitsabstand zu diesem Maschinenteil aufweist.

Die DE202007002078U1 offenbart eine Blende für einen optoelektronischen Sensor zur Absicherung einer Maschine. Bei einer Funktionsweise der Maschine führt eine zumindest teilweise Unterbrechung des Lichtstrahles dazu, dass ein Schaltsignal ausgelöst wird, beispielsweise zum Anhalten des Oberwerkzeuges. Die Funktion der Blende, die eine Ausnehmung aufweist besteht, darin, dass - wenn die Ausnehmung frei ist und Licht hindurchtreten kann - feststellbar ist, dass eine Werkzeugposition nicht mehr korrekt ist.

Aufgabe der vorliegenden Erfindung war es, die Nachteile des Standes der Technik zu überwinden und ein Verfahren zum Betreiben einer Biegepresse zur Verfügung zu stellen, mit dem die Einstellung der Lichtschranke weiter verbessert werden kann. Insbesondere soll sichergestellt sein, dass die Lichtschranke - unabhängig vom bzw. bei jedem verwendeten Biegewerkzeug - die optimale Position einnimmt und dadurch die Sicherheitsfunktion zuverlässig ausüben kann. Es soll insbesondere auch ausgeschlossen werden, dass eine Fehlpositionierung (z.B. durch Eingabe falscher Werkzeugdaten) stattfindet und zu gefährlichen Situationen führt.

Diese Aufgabe wird durch ein Verfahren der eingangs genannten Art dadurch gelöst, dass die Steuereinrichtung vor einem Biegevorgang oder einer Folge von Biegevorgängen die erste Halterung durch Ansteuerung des ersten Verstellantriebes in eine Arbeitsposition bringt, in der die Werkzeugspitze eines von der ersten Werkzeughalterung gehaltenen Biegewerkzeuges innerhalb des durch die Lichtschranke gebildeten Lichtfeldes, vorzugsweise in einem vorgeg ebenen ersten Bereich des Lichtfeldes, liegt und dass die Steuereinrichtung die erste Halterung in Abhängigkeit des vom Lichtempfänger detektierten Schattens der Werkzeugspitze in die Arbeitsposition bringt.

Durch diese Maßnahme kann die Werkzeugspitze, die für die Position der Lichtschranke ausschlaggebend ist, als Bezugspunkt herangezogen werden. Die Verstellung der ersten Halterung und damit die Einstellung des Lichtempfängers (und somit Positionierung der Lichtschranke) wird jeweils auf die Werkzeugspitze eines für den nachfolgenden Biegevorgang gerüstetes Biegewerkzeuges bezogen. Dadurch kann nicht nur eine genaue und zuverlässige Positionierung der Lichtschranke erfolgen, sondern können Fehleinstellungen von vornherein vermieden werden. Die Werkzeugspitze kann von dem Lichtempfänger bzw. der Steuervorrichtung als solche erkannt und von anderen Schatten (Finger, Fremdkörper, etc.) unterschieden werden.

Bevorzugt ist, wenn die erste Halterung mit dem Lichtsender derart verstellt wird, dass die Werkzeugspitze in einem vorgegebenen ersten Bereich innerhalb des Lichtfeldes zu liegen kommt. Dieser erste Bereich ist kleiner als das Lichtfeld und entspricht einem optimalen Bereich. Der erste Bereich bzw. dessen Koordinaten (innerhalb des Lichtfeldes bzw. innerhalb der Sensorfläche des Lichtempfängers) ist im Lichtempfänger und/oder in der Steuereinrichtung hinterlegt und wird datentechnisch mit der Position der erfassten Werkzeugspitze in Zusammenhang gebracht. Auf diese Weise kann ermittelt werden, ob die Werkzeugspitze tatsächlich in dem vorgegebenen ersten Bereich liegt.

Ein Biegevorgang wird von der Steuereinrichtung erst dann gestartet, wenn der Einstellvorgang der Lichtschranke beendet ist und deren Position den erfindungsgemäßen Kriterien genügt.

Der Begriff "Werkzeugspitze" ist breit zu verstehen und umfasst in vorliegender Anmeldung nicht nur eine punktförmige Spitze, sondern auch abgerundete Werkzeugenden, bzw. - insbesondere bei Abkantpressen - auch die längliche Kante eines Biegewerkzeuges, die im Querschnitt wie eine Spitze oder abgerundete Spitze bzw. ein zulaufendes Ende aussieht. "Werkzeugspitze" kann auch das auf das Werkstück einwirkende Ende eines stempelförmigen Biegewerkzeuges bedeuten, bzw. gang allgemein den beim Biegevorgang zuerst mit dem Werkstück in Berührung kommenden Bereich des Biegewerkzeuges beschreiben oder - mit anderen Worten - das dem Werkstück zugewandte Ende des Formabschnittes des Biegewerkzeuges.

Das Lichtfeld entspricht dem Querschnitt der Lichtschranke. Eine bevorzugte Ausführungsform zeichnet sich dadurch aus, dass die Lichtschranke aus zumindest einem, zu einem Lichtfeld aufgeweiteten Lichtstrahl gebildet wird, und/oder mehrere, vorzugsweise parallel verlaufende Lichtstrahlen umfasst. In ersterem Fall kann eine Linse zur Aufweitung eines einzelnen Lichtstrahls verwendet werden. Bevorzugt ist ein homogenes Lichtfeld (quer zur Ausbreitungsrichtung der Lichtschranke). Unter dem Begriff "Lichtschranke" wird somit jegliche Art von Lichtstrahl(en) oder Lichtfeld(ern) - aus einem oder mehreren einzelnen Lichtstrahlen/- feldern verstanden. Es wird das Prinzip genützt, dass eine teilweise oder vollständige Unterbrechung (durch fremde Objekte bzw. eine Hand oder einen Finger einer Bedienperson, etc.) der Lichtschranke die Detektion einer Verdunklung bzw. eines Schattens durch den Lichtempfänger ermöglicht. Gleichermaßen ermöglicht das Lichtfeld die Detektion bzw. Erkennung des Schattens, der von der (in das Lichtfeld ragenden) Werkzeugspitze auf den Lichtempfänger geworfen wird.

Die Lichtschranke erstreckt sich im Wesentlichen parallel zur ersten Werkzeughalterung, die vorzugsweise in Form einer Führungsschiene ausgebildet ist, bzw. - bei Abkantpressen - im Wesentlichen parallel zur Biegelinie.

Eine bevorzugte Ausführungsform zeichnet sich dadurch aus, dass der Lichtempfänger ein Bildempfänger, vorzugsweise eine Kamera ist. Insbesondere kann eine pixelweise Auswertung des aufgenommenen Bildes die Schattenerkennung und -zuordnung wesentlich erleichtern. Bevorzugt kann der Lichtempfänger ein flächiger Sensor sein, dessen lichtempfindliche Fläche z.B. zumindest dem Querschnitt der Lichtschranke, also der Fläche des Lichtfeldes, entspricht.

Obwohl es bevorzugt ist, die Halterung des Lichtempfängers - analog zu jener des Lichtsenders - an der ersten Plattform anzuordnen und relativ zu dieser verstellbar auszubilden, könnte in einer alternativen Ausführungsform der Lichtempfänger auch stationär oder unverstellbar an der ersten Plattform befestigt sein und z.B. durch entsprechende Größe (flächiger Bildsensor) dazu eingerichtet sein, die Lichtschranke in ihren verschiedenen Positionen relativ zur ersten Plattform zu erfassen.

Unter Plattform kann jegliches Gebilde verstanden werden, welches geeignet ist eine Werkzeughalterung zu tragen oder integral auszubilden und Kräfte, die beim Biegevorgang übertragen werden, aufzunehmen. Die erste Plattform und/oder die zweite Plattform können insbesondere als Pressbalken ausgebildet sein und/oder quer zur Arbeitsbewegung bzw. Pressrichtung eine Längserstreckung aufweisen.

Die Sicherheitseinrichtung ist dabei so ausgebildet, dass die Position der Lichtschranke, die durch die Position des Lichtsenders bestimmt wird, relativ zur ersten Werkzeughalterung bzw. zum darin gehaltenen Werkzeug eingestellt werden kann. Eine (vollständige oder teilweise) Unterbrechung der Lichtschranke bewirkt einen Schatten, der mittels des Lichtempfängers detektiert wird. Die mit dem Lichtempfänger verbundene Steuereinrichtung stoppt oder verlangsamt in Abhängigkeit eines detektierten Schattens die Arbeitsbewegung der Biegepresse.

Die Einstellung der Lichtschranke in die Arbeitsposition erfolgt durch Bewegung der Halterung(en) quer zur Längserstreckung der Werkzeughalterung, vorzugsweise parallel zur Richtung der Arbeitsbewegung der bewegbaren Plattform, wobei die Richtung der Arbeitsbewegung der bewegbaren Plattform bevorzugt vertikal ist.

Der/die Verstellantrieb(e) kann insbesondere als Linearantrieb, z.B. eine Zahnstange mit Ritzel umfassend, ausgebildet sein.

Eine bevorzugte Ausführungsform zeichnet sich dadurch aus, dass die Steuereinrichtung die erste Halterung in Abhängigkeit des vom Lichtempfänger detektierten Schattens der Werkzeugspitze in die Arbeitsposition bringt. Durch diese Maßnahme kann die Lichtschranke immer in Bezug auf das gerade verwendete Werkzeug ausgerichtet bzw. positioniert werden. Dies ist insbesondere bei der Feinjustierung von Vorteil. Die Einstellung erfolgt dabei unabhängig von Einflüssen wie Temperaturausdehnungen des Werkzeuges, Werkzeugabnützungen oder Werkzeugtoleranzen, wodurch immer eine optimale, hohe Sicherheit gewährleistende Positionierung der Lichtschranke stattfindet.

Eine bevorzugte Ausführungsform zeichnet sich dadurch aus, dass in der Arbeitsposition der ersten Halterung der Abstand zwischen der Werkzeugspitze und dem der Werkzeugspitze gegenüberliegenden Rand des Lichtfeldes zumindest ein Drittel, vorzugsweise zumindest die Hälfte, der Ausdehnung des Lichtfeldes in der Richtung, in der die Arbeitsbewegung der bewegbaren Plattform erfolgt, beträgt. In dem nicht von der Werkzeugspitze abgeschatteten Bereich können nun durch den Lichtempfänger bzw. die Steuereinrichtung Hindernisse (Finger, etc.) erkannt werden und in Folge die Arbeitsbewegung bzw. der Biegevorgang gestoppt werden.

Die Fläche des Lichtfeldes beträgt vorzugsweise zumindest 10 cm², besonders bevorzugt zumindest 20 cm². Wie bereits erwähnt kann das Lichtfeld kontinuierlich ausgeleuchtet sein, z.B. durch einen aufgeweiteten Strahl, oder durch einen Array aus diskreten Lichtstrahlen gebildet sein.

Eine bevorzugte Ausführungsform zeichnet sich dadurch aus, dass anhand des vom Lichtempfänger detektierten Schattens der Werkzeugspitze die Position der Werkzeugspitze innerhalb des Lichtfeldes oder die Position der Lichtschranke (relativ zur ersten Werkzeughalterung oder zu einem von dieser gehaltenen Werkzeuges) ermittelt wird. Die Positionsermittlung ermöglicht nicht nur eine zuverlässige Erkennung, ob sich die Werkzeugspitze in einem vorgegebenen Soll-Bereich befindet oder nicht, sondern ermöglicht auch das Nachjustieren bzw. Feineinstellen der Lichtschranke durch Verstellung des Lichtsenders.

Eine bevorzugte Ausführungsform zeichnet sich dadurch aus, dass in Abhängigkeit der ermittelten Position der Werkzeugspitze innerhalb des Lichtfeldes oder der ermittelten Position der Lichtschranke die erste Halterung verstellt wird, bis die Werkzeugspitze in einer Soll-Position oder einem Soll-Bereich innerhalb des Lichtfeldes, vorzugsweise in einem vorgegebenen ersten Bereich, zu liegen kommt.

Eine bevorzugte Ausführungsform zeichnet sich dadurch aus, dass in Abhängigkeit der ermittelten Position der Werkzeugspitze innerhalb des Lichtfeldes oder der ermittelten Position der Lichtschranke die erste Halterung verstellt wird, wenn die Werkzeugspitze außerhalb des vorgegebenen ersten Bereiches und innerhalb eines vorgegebenen zweiten Bereiches innerhalb des Lichtfeldes liegt, wobei der vorgegebene erste Bereich innerhalb des vorgegebenen zweiten Bereiches liegt, und dass die Verstellung der ersten Halterung solange erfolgt, bis die Werkzeugspitze in dem vorgegebenen ersten Bereich zu liegen kommt. Dieses Kriterium eröffnet die Möglichkeit einen Einstellvorgang nur dann vorzunehmen, wenn die Werkzeugspitze in einem vorgegebenen zweiten Bereich liegt. Nach Rüsten des Werkzeuges wird die Halterung entsprechend den Dimensionen des Werkzeuges verstellt. Im Idealfall wäre die Werkzeugspitze bereits in der Soll-Position. Da es sich hier aber in den meisten Fällen um ein grobes Anfahren handelt, muss nun noch eine Feineinstellung (aufgrund von Temperaturausdehnungen, Werkzeugabnützungen bzw. -toleranzen) gemäß Erfindung vorgenommen werden. Wenn die Werkzeugspitze aber von vornherein außerhalb des größeren zweiten Bereiches liegt, ist anzunehmen, dass ein falsches Werkzeug eingesetzt wurde oder sonst irgendein Fehler vorliegt. Auch diese Maßnahme kann die Durchführung eines Biegevorganges mit einer falsch positionierten Lichtschranke bzw. einem falsch gerüsteten Werkzeug verhindern, wie z.B. nachstehende Ausführungsform zeigt.

Eine solche zeichnet sich dadurch aus, dass an einer Benutzerschnittstelle der Biegepresse eine Information und/oder Warnung ausgegeben wird und/oder der Einstellvorgang unterbrochen wird, wenn kein Schatten der Werkzeugspitze detektiert wird oder wenn die Werkzeugspitze außerhalb eines vorgegebenen zweiten Bereiches innerhalb des Lichtfeldes liegt, wobei der vorgegebene erste Bereich innerhalb des vorgegebenen zweiten Bereiches liegt.

Eine bevorzugte Ausführungsform zeichnet sich dadurch aus, dass die zweite Halterung an einer zweiten, der ersten Seite gegenüberliegenden Seite der ersten Plattform angeordnet ist und durch einen zweiten Verstellantrieb relativ zur ersten Plattform verstellbar ist, wobei die Steuereinrichtung mit dem zweiten Verstellantrieb verbunden ist. Die zweite Halterung kann somit mit der ersten Halterung mitbewegt werden, sodass das Licht der Lichtschranke immer auf den Lichtempfänger trifft. Die Fläche des Lichtempfängers kann daher ungefähr so groß sein wie das Lichtfeld.

Eine bevorzugte Ausführungsform zeichnet sich dadurch aus, dass die zweite Halterung mit dem Lichtempfänger in demselben Ausmaß verstellt wird, wie die erste Halterung mit dem Lichtsender.

Eine bevorzugte Ausführungsform zeichnet sich dadurch aus, dass der erste Verstellantrieb unabhängig vom zweiten Verstellantrieb betätigbar ist. Dadurch können Feineinstellungen zwischen Lichtsender und Lichtempfänger vorgenommen werden.

Eine bevorzugte Ausführungsform zeichnet sich dadurch aus, dass das Verfahren einen Justiervorgang umfasst, mit dem der Lichtsender und der Lichtempfänger relativ zueinander justiert werden, indem der erste Verstellantrieb und/oder der zweite Verstellantrieb betätigt wird/werden. Um eine optimale (insbesondere millimetergenaue) Positionierung der Lichtschranke zur ermöglichen, müssen Lichtsender und Lichtempfänger hinsichtlich ihrer Relativposition optimal aufeinander abgestimmt sein. Abweichungen von solch einer optimalen Ausrichtung können durch diese Ausführungsform leicht ausgeglichen werden.

Eine bevorzugte Ausführungsform zeichnet sich dadurch aus, dass der Justiervorgang in Abhängigkeit des vom Lichtempfänger detektierten Schattens der Werkzeugspitze, insbesondere in Abhängigkeit der Position der Werkzeugspitze innerhalb des Lichtfeldes, erfolgt. Hier wird die Werkzeugspitze als Bezugspunkt gewählt. Zusätzlich kann wie in nachstehender Ausführungsform beschrieben ein weiterer Bezug, der durch das Lichtfeld definiert wird, herangezogen werden.

Eine solche Ausführungsform zeichnet sich dadurch aus, dass das Lichtfeld, vorzugsweise in zumindest einem seiner Randbereiche, ein in Richtung der Verstellbewegung der ersten Halterung veränderliches Muster aufweist, und dass der Justiervorgang in Abhängigkeit der Relativposition des vom Lichtempfänger detektierten Schattens der Werkzeugspitze relativ zu dem vom Lichtempfänger detektierten Muster erfolgt. Aufgrund dieser beiden Bezüge (Werkzeugspitze und Muster) kann leicht festgestellt werden, ob der Lichtsender oder der Lichtempfänger und auch in welcher Richtung dieser nachjustiert werden muss.

Eine bevorzugte Ausführungsform zeichnet sich dadurch aus, dass die erste Werkzeughalterung eine Oberwerkzeughalterung und die zweite Werkzeughalterung eine Unterwerkzeughalterung ist und/oder dass die erste Plattform relativ zur zweiten Plattform bewegbar ist. Es hat sich gezeigt, dass eine Anordnung der Sicherheitseinrichtung bzw. der Halterung(en) an der oberen, bewegbaren Plattform platzsparender ist, insbesondere wenn Biegevorgänge im Endbereich der Führungsschiene durchgeführt werden.

In einer weiteren Ausführungsform können die Halterungen für Lichtsender und Lichtempfänger in eine Parkposition verfahren werden, in der die Stirnseiten der länglichen Werkzeughalterungen freigegeben sind (während die Stirnseiten in der Arbeitsposition der Halterungen verdeckt sind). Das Anfahren der Parkposition ermöglicht das einfache Wechseln der Biegewerkzeuge über die stirnseitige(n) Öffnungen der Führungsschiene.

Das Ziel wird auch erreicht mit einer Biegepresse zum Biegen eines Werkstückes, insbesondere Abkantpresse, umfassend
- eine erste Plattform mit einer ersten Werkzeughalterung und eine zweite Plattform mit einer zweiten Werkzeughalterung, wobei eine der Plattformen zur Ausführung einer Arbeitsbewegung relativ zur anderen Plattform bewegbar ist,
- eine Sicherheitseinrichtung zum Erzeugen einer zwischen den Werkzeughalterungen quer zur Arbeitsbewegung der bewegbaren Plattform verlaufenden Lichtschranke, insbesondere Laserlichtschranke, welche im Querschnitt ein Lichtfeld bildet, wobei die Sicherheitseinrichtung eine erste Halterung, die einen Lichtsender zum Erzeugen der Lichtschranke trägt, und eine zweite Halterung, die einen Lichtempfänger zum Empfangen des Lichtes der Lichtschranke trägt, aufweist, und wobei die erste Halterung an einer ersten Seite der ersten Plattform angeordnet ist und durch einen ersten Verstellantrieb relativ zur ersten Plattform derart verstellbar ist, dass die Position der Lichtschranke relativ zur ersten Werkzeughalterung in Richtung der Arbeitsbewegung der bewegbaren Plattform veränderbar ist,
- eine Steuereinrichtung, die mit dem ersten Verstellantrieb verbunden ist,
dadurch gekennzeichnet, dass die Biegepresse zur Durchführung eines erfindungsgemäßen Verfahrens ausgebildet ist, wobei die Steuereinrichtung konfiguriert ist, das erfindungsgemäße Verfahren zu steuern, insbesondere durch Auswerten und/oder Verarbeiten der vom Lichtempfänger aufgenommen oder ausgewerteten Daten und/oder durch Verstellen des ersten Verstellantriebes und/oder des zweiten Verstellantriebes.

Zum besseren Verständnis der Erfindung wird diese anhand der nachfolgenden Figuren näher erläutert.

Es zeigen jeweils in stark vereinfachter, schematischer Darstellung:
- Fig. 1: eine erfindungsgemäße Biegepresse
- Fig. 2: einen Ausschnitt eines Querschnittes der Biegepresse mit Lichtfeld bei optimal eingestellter Lichtschranke
- Fig. 3: das Lichtfeld mit Biegewerkzeug mit noch nicht optimal eingestellter Lichtschranke
- Fig. 4: das Lichtfeld mit Biegewerkzeug bei falschem oder falsch deklariertem Biegewerkzeug
- Fig. 5: eine bevorzugte Ausführungsform mit einem Lichtfeld, welches in seinen seitlichen Randbereichen ein Muster aufweist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

### FIGURENBESCHREIBUNG

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

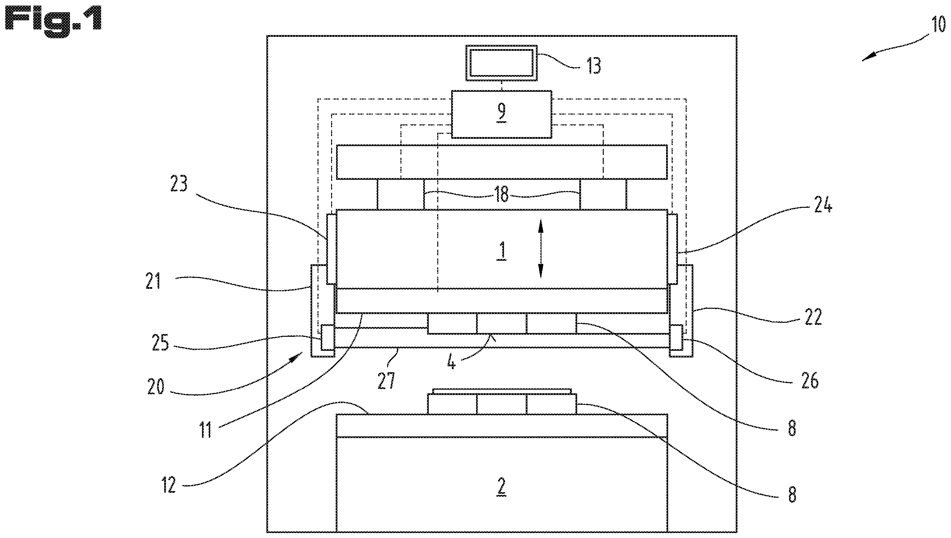

Fig. 1 zeigt eine Biegepresse 10 zum Biegen eines Werkstückes 19, hier in Form einer Abkantpresse. Eine erste (obere) Plattform 1 mit einer ersten Werkzeughalterung 11 ist zur Ausführung einer Arbeitsbewegung (siehe Doppelpfeil) relativ zu einer zweiten (unteren) Plattform 2 mit einer zweiten Werkzeughalterung 12 bewegbar. Die Arbeitsbewegung wird durch die Steuereinrichtung 9, die mit dem Pressantrieb 18 verbunden ist und diesen ansteuert, bewirkt.

In der dargestellten Ausführungsform ist die erste Werkzeughalterung 11 eine Oberwerkzeughalterung und die zweite Werkzeughalterung 12 eine Unterwerkzeughalterung. Die erste Plattform 1 ist relativ zur zweiten, stationären Plattform 2 bewegbar.

Die Biegepresse 10 umfasst eine Sicherheitseinrichtung 20 zum Erzeugen einer zwischen den Werkzeughalterungen 11, 12 quer zur Arbeitsbewegung der bewegbaren Plattform 1 verlaufenden Lichtschranke 27) insbesondere Laserlichtschranke, welche im Querschnitt ein Lichtfeld 7 bildet. Die Sicherheitseinrichtung 20 weist eine erste Halterung 21, die einen Lichtsender 25 zum Erzeugen der Lichtschranke 27 trägt, und eine zweite Halterung 22, die einen Lichtempfänger 26 zum Empfangen des Lichtes der Lichtschranke 27 trägt, auf. Die erste Halterung 21 ist an einer ersten Seite der ersten Plattform 1 angeordnet und durch einen ersten Verstellantrieb 23 relativ zur ersten Plattform 1 derart verstellbar, dass die Position der Lichtschranke 27 relativ zur ersten Werkzeughalterung 11 in Richtung der Arbeitsbewegung der bewegbaren Plattform 1 (siehe Doppelpfeil in Fig. 1) veränderbar ist.

Die erste Halterung 21 ist an einer ersten Seite der ersten Plattform 1 angeordnet und durch einen ersten Verstellantrieb 23 relativ zur ersten Plattform 1 verstellbar. Die zweite Halterung 22 ist an einer zweiten, der ersten Seite gegenüberliegenden Seite der ersten Plattform 1 angeordnet und durch einen zweiten Verstellantrieb 24 relativ zur ersten Plattform 1 verstellbar.

Die Steuereinrichtung 9 ist mit dem ersten Verstellantrieb 23 und dem zweiten Verstellantrieb 24 verbunden. Lichtsender 25 und Lichtempfänger 26 sind ebenfalls mit der Steuereinrichtung 9 verbunden.

Die Sicherheitseinrichtung 20 ist dabei so ausgebildet, dass die Position der Lichtschranke 27, die durch die Position des Lichtsenders 25 an einer der Halterungen bestimmt wird, relativ zur ersten Werkzeughalterung 11 bzw. zum darin gehaltenen Werkzeug 8 eingestellt werden kann. Eine (vollständige oder teilweise) Unterbrechung der Lichtschranke 27 durch ein im Arbeitsweg auftretendes Hindernis (z.B. Finger einer Bedienperson) bewirkt einen Schatten, der mittels des Lichtempfängers 26 detektiert wird. Die mit dem Lichtempfänger 26 verbundene Steuereinrichtung 9 stoppt oder verlangsamt in Abhängigkeit eines detektierten Schattens die Arbeitsbewegung der Biegepresse 10 (Ansteuerung des Pressantriebes 18).

Bevorzugt sind die erste Werkzeughalterung 11 und/oder die zweite Werkzeughalterung 12 in Form einer Führungsschiene ausgebildet, die zumindest an einem ihrer Enden eine stirnseitige Öffnung zum Wechseln eines Biegewerkzeuges 8 aufweisen kann.

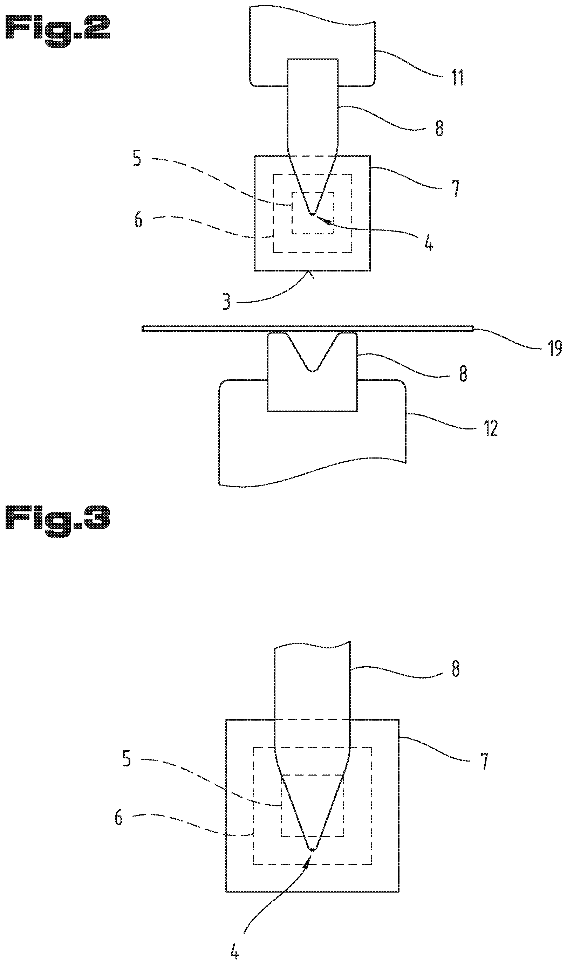

Das erfindungsgemäße Verfahren ist nun dadurch gekennzeichnet, dass die Steuereinrichtung 9 vor einem Biegevorgang oder einer Folge von Biegevorgängen die erste Halterung 21 durch Ansteuerung des ersten Verstellantriebes 23 in eine Arbeitsposition bringt, in der die Werkzeugspitze 4 eines von der ersten Werkzeughalterung 11 gehaltenen Biegewerkzeuges 8 innerhalb des durch die Lichtschranke 27 gebildeten Lichtfeldes 7, vorzugsweise in einem vorgegebenen ersten Bereich 5 des Lichtfeldes 7, liegt. Das Ergebnis einer solchen Einstellung ist in Fig. 2 zu sehen.

Bevorzugt erfolgt die Einstellung derart, dass die Steuereinrichtung 9 die erste Halterung 21 in Abhängigkeit des vom Lichtempfänger 26 detektierten Schattens der Werkzeugspitze 4 in die Arbeitsposition bringt.

Wenn beispielsweise die Spitze bzw. deren Schatten außerhalb des Soll-Bereiches, also außerhalb des vorgegebenen ersten Bereiches liegt, wie dies in Fig. 3 der Fall ist, wird durch Betätigung des Verstellantriebes 23 die erste Halterung mit dem Lichtsender entsprechend verstellt, bis die Lichtschranke die Position aus Fig. 2 einnimmt.

Es ist bevorzugt, wenn in der Arbeitsposition der ersten Halterung 21 der Abstand zwischen der Werkzeugspitze 4 und dem der Werkzeugspitze 4 gegenüberliegenden Rand 3 des Lichtfeldes 7 zumindest ein Drittel, vorzugsweise zumindest die Hälfte, der Ausdehnung des Lichtfeldes 7 in der Richtung, in der die Arbeitsbewegung der bewegbaren Plattform 1 erfolgt, beträgt (siehe Fig. 2).

Es kann nun anhand des vom Lichtempfänger 26 detektierten Schattens der Werkzeugspitze 4 die Position der Werkzeugspitze 4 innerhalb des Lichtfeldes 7 oder die Position der Lichtschranke 27 ermittelt werden.

In Abhängigkeit der ermittelten Position der Werkzeugspitze 4 innerhalb des Lichtfeldes 7 oder der ermittelten Position der Lichtschranke 27 wird nun die erste Halterung 21 verstellt, bis die Werkzeugspitze 4 in einer Soll-Position oder einem Soll-Bereich innerhalb des Lichtfeldes 7, vorzugsweise in dem vorgegebenen ersten Bereich 5, zu liegen kommt.

Im Zusammenhang mit der in Fig. 3 dargestellten Relativposition zwischen Werkzeugspitze 4 und Lichtfeld 7 kann nun in Abhängigkeit der ermittelten Position der Werkzeugspitze 4 innerhalb des Lichtfeldes 7 oder der ermittelten Position der Lichtschranke 27 die erste Halterung 21 verstellt werden, wenn die Werkzeugspitze 4 außerhalb des vorgegebenen ersten Bereiches 5 aber noch innerhalb eines vorgegebenen zweiten Bereiches 6 innerhalb des Lichtfeldes 7 liegt. Der vorgegebene erste Bereich 5 liegt innerhalb des vorgegebenen zweiten Bereiches 6. Die Verstellung der ersten Halterung (21) erfolgt solange, bis die Werkzeugspitze 4 in dem vorgegebenen ersten Bereich 5 zu liegen kommt (siehe Fig. 2).

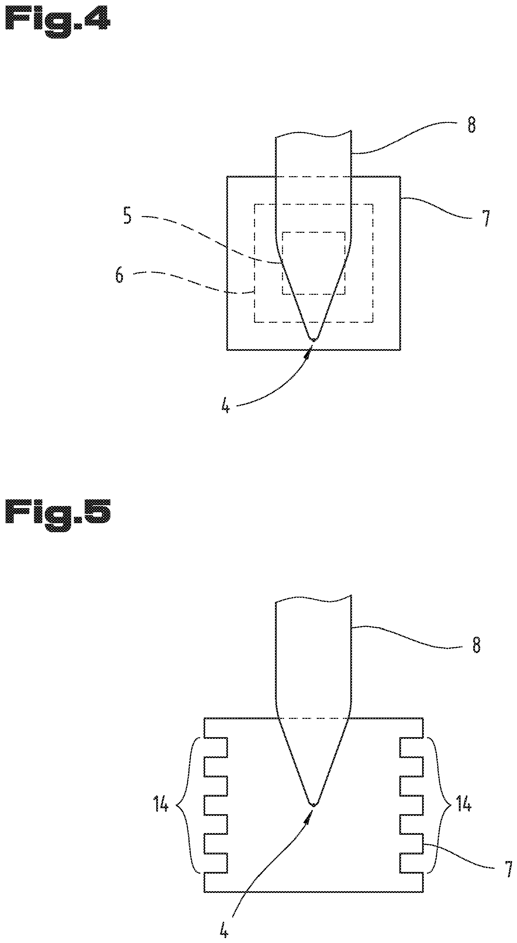

Wenn nun aber kein Schatten der Werkzeugspitze 4 detektiert wird oder wenn die Werkzeugspitze 4 außerhalb eines vorgegebenen zweiten Bereiches 6 liegt (siehe Fig. 4) kann an einer Benutzerschnittstelle 13 eine Information und/oder Warnung ausgegeben wird und/oder der Einstellvorgang unterbrochen werden.

In der in Fig. 1 dargestellten Ausführungsform ist die zweite Halterung mit dem Lichtempfänger analog zur ersten Halterung ausgebildet und wird die zweite Halterung 22 mit dem Lichtempfänger 26 jeweils in demselben Ausmaß verstellt wie die erste Halterung 21 mit dem Lichtsender 25. Wie bereits erwähnt könnte der Lichtempfänger aber auch anders, insbesondere stationär ausgebildet sein, z.B. wenn sein Erfassungsbereich, bzw. seine lichtempfindliche Fläche einen größeren Bereich abdeckt (also alle möglichen Positionen des Lichtfeldes in Richtung der Arbeitsbewegung abdeckt).

Trotzdem kann der erste Verstellantrieb 23 unabhängig vom zweiten Verstellantrieb 24 betätigbar sein, wodurch eine Feinjustierung ermöglicht wird. Bei einer solchen Feinjustierung können der Lichtsender 25 und der Lichtempfänger 26 relativ zueinander justiert werden, indem der erste Verstellantrieb 23 und/oder der zweite Verstellantrieb 24 betätigt wird/werden.

Der Justiervorgang kann in Abhängigkeit des vom Lichtempfänger 26 detektierten Schattens der Werkzeugspitze 4, insbesondere in Abhängigkeit der Position der Werkzeugspitze 4 innerhalb des Lichtfeldes 7, erfolgen. Hier wird somit die werkzeugspitze als (ein) Bezugspunkt herangezogen.

Besonders bevorzugt ist allerdings, wenn das Lichtfeld 7, vorzugsweise in zumindest einem seiner Randbereiche, ein in Richtung der Verstellbewegung der ersten Halterung 21 veränderliches Muster 14 aufweist (siehe Fig. 5). Der Justiervorgang kann dann in Abhängigkeit der Relativposition des vom Lichtempfänger 26 detektierten Schattens der Werkzeugspitze 4 relativ zu dem vom Lichtempfänger 26 detektierten Muster 14 erfolgen. Aufgrund dieser beiden Bezüge (Werkzeugspitze und Muster) kann leicht festgestellt werden, ob der Lichtsender oder der Lichtempfänger und auch in welcher Richtung dieser nachjustiert werden muss.

Die Biegepresse 10 ist jeweils zur Durchführung eines erfindungsgemäßen Verfahrens ausgebildet und die Steuereinrichtung 9 konfiguriert, um das erfindungsgemäße Verfahren zu steuern, insbesondere durch Auswerten und/oder Verarbeiten der vom Lichtempfänger 26 aufgenommen oder ausgewerteten Daten und/oder durch Verstellen des ersten Verstellantriebes 23 und/oder des zweiten Verstellantriebes 24.

### Bezugszeichenaufstellung

- 1: erste Plattform
- 2: zweite Plattform
- 3: Rand des Lichtfeldes 7
- 4: Werkzeug spitze
- 5: vorgegebener erster Bereich
- 6: vorgegebener zweiter Bereich
- 7: Lichtfeld
- 8: Biegewerkzeug
- 9: Steuereinrichtung
- 10: Biegepresse
- 11: erste Werkzeughalterung
- 12: zweite Werkzeughalterung
- 13: Benutzerschnittstelle
- 14: Muster
- 18: Pressantrieb
- 19: Werkstück
- 20: Sicherheitseinrichtung
- 21: erste Halterung
- 22: zweite Halterung
- 23: erster Verstellantrieb
- 24: zweiter Verstellantrieb
- 25: Lichtsender
- 26: Lichtempfänger
- 27: Lichtschranke

## Patentansprüche

1. Verfahren zum Betreiben einer Biegepresse (10), insbesondere Abkantpresse, wobei die Biegepresse (10) umfasst
- eine erste Plattform (1) mit einer ersten Werkzeughalterung (11) und eine zweite Plattform (2) mit einer zweiten Werkzeughalterung (12), wobei eine der Plattformen (1) zur Ausführung einer Arbeitsbewegung relativ zur anderen Plattform (2) bewegbar ist,
- eine Sicherheitseinrichtung (20) zum Erzeugen einer zwischen den Werkzeughalterungen (11, 12) quer zur Arbeitsbewegung der bewegbaren Plattform (1) verlaufenden Lichtschranke (27), insbesondere Laserlichtschranke, welche im Querschnitt ein Lichtfeld (7) bildet, wobei die Sicherheitseinrichtung (20) eine erste Halterung (21), die einen Lichtsender (25) zum Erzeugen der Lichtschranke (27) trägt, und eine zweite Halterung (22), die einen Lichtempfänger (26) zum Empfangen des Lichtes der Lichtschranke (27) trägt, aufweist, und wobei die erste Halterung (21) an einer ersten Seite der ersten Plattform (1) angeordnet ist und durch einen ersten Verstellantrieb (23) relativ zur ersten Plattform (1) derart verstellbar ist, dass die Position der Lichtschranke (27) relativ zur ersten Werkzeughalterung (11) in Richtung der Arbeitsbewegung der bewegbaren Plattform (1) veränderbar ist,
- eine Steuereinrichtung (9), die mit dem ersten Verstellantrieb (23) verbunden ist,
**dadurch gekennzeichnet, dass**
die Steuereinrichtung (9) vor einem Biegevorgang oder einer Folge von Biegevorgängen die erste Halterung (21) durch Ansteuerung des ersten Verstellantriebes (23) in eine Arbeitsposition bringt, in der die Werkzeugspitze (4) eines von der ersten Werkzeughalterung (11) gehaltenen Biegewerkzeuges (8) innerhalb des durch die Lichtschranke (27) gebildeten Lichtfeldes (7), vorzugsweise in einem vorgegebenen ersten Bereich (5) des Lichtfeldes (7), liegt,
und dass die Steuereinrichtung (9) die erste Halterung (21) in Abhängigkeit des vom Lichtempfänger (26) detektierten Schattens der Werkzeugspitze (4) in die Arbeitsposition bringt.

2. Verfahren nach Anspruch 1, **dadurch gekennzeichnet, dass** der Lichtempfänger ein Bildempfänger, vorzugsweise eine Kamera, ist, wobei vorzugsweise die Schattenerkennung und -zuordnung mittels pixelweiser Auswertung des aufgenommenen Bildes erfolgt.

3. Verfahren nach Anspruch 1 oder 2, **dadurch gekennzeichnet, dass** in der Arbeitsposition der ersten Halterung (21) der Abstand zwischen der Werkzeugspitze (4) und dem der Werkzeugspitze (4) gegenüberliegenden Rand (3) des Lichtfeldes (7) zumindest ein Drittel, vorzugsweise zumindest die Hälfte, der Ausdehnung des Lichtfeldes (7) in der Richtung, in der die Arbeitsbewegung der bewegbaren Plattform (1) erfolgt, beträgt.

4. Verfahren nach einem der vorhergehenden Ansprüche, **dadurch gekennzeichnet, dass** anhand des vom Lichtempfänger (26) detektierten Schattens der Werkzeugspitze (4) die Position der Werkzeugspitze (4) innerhalb des Lichtfeldes (7) oder die Position der Lichtschranke (27) ermittelt wird.

5. Verfahren nach einem der vorhergehenden Ansprüche, **dadurch gekennzeichnet, dass** in Abhängigkeit der ermittelten Position der Werkzeugspitze (4) innerhalb des Lichtfeldes (7) oder der ermittelten Position der Lichtschranke (27) die erste Halterung (21) verstellt wird, bis die Werkzeugspitze (4) in einer Soll-Position oder einem Soll-Bereich innerhalb des Lichtfeldes (7), vorzugsweise in einem vorgegebenen ersten Bereich (5), zu liegen kommt.

6. Verfahren nach einem der vorhergehenden Ansprüche, **dadurch gekennzeichnet, dass** in Abhängigkeit der ermittelten Position der Werkzeugspitze (4) innerhalb des Lichtfeldes (7) oder der ermittelten Position der Lichtschranke (27) die erste Halterung (21) verstellt wird, wenn die Werkzeugspitze (4) außerhalb des vorgegebenen ersten Bereiches (5) und innerhalb eines vorgegebenen zweiten Bereiches (6) innerhalb des Lichtfeldes (7) liegt, wobei der vorgegebene erste Bereich (5) innerhalb des vorgegebenen zweiten Bereiches (6) liegt, und dass die Verstellung der ersten Halterung (21) solange erfolgt, bis die Werkzeugspitze (4) in dem vorgegebenen ersten Bereich (5) zu liegen kommt.

7. Verfahren nach einem der vorhergehenden Ansprüche, **dadurch gekennzeichnet, dass** an einer Benutzerschnittstelle (13) der Biegepresse (10) eine Information und/oder Warnung ausgegeben wird und/oder der Einstellvorgang unterbrochen wird, wenn kein Schatten der Werkzeugspitze (4) detektiert wird oder wenn die Werkzeugspitze (4) außerhalb eines vorgegebenen zweiten Bereiches (6) innerhalb des Lichtfeldes (7) liegt, wobei der vorgegebene erste Bereich (5) innerhalb des vorgegebenen zweiten Bereiches (6) liegt.

8. Verfahren nach einem der vorhergehenden Ansprüche, **dadurch gekennzeichnet, dass** die zweite Halterung (22) an einer zweiten, der ersten Seite gegenüberliegenden Seite der ersten Plattform (1) angeordnet ist und durch einen zweiten Verstellantrieb (24) relativ zur ersten Plattform (1) verstellbar ist, wobei die Steuereinrichtung (9) mit dem zweiten Verstellantrieb (24) verbunden ist.

9. Verfahren nach einem der vorhergehenden Ansprüche, **dadurch gekennzeichnet, dass** die zweite Halterung (22) mit dem Lichtempfänger (26) in demselben Ausmaß verstellt wird, wie die erste Halterung (21) mit dem Lichtsender (25).

10. Verfahren nach einem der vorhergehenden Ansprüche, **dadurch gekennzeichnet, dass** der erste Verstellantrieb (23) unabhängig vom zweiten Verstellantrieb (24) betätigbar ist.

11. Verfahren nach einem der vorhergehenden Ansprüche, **dadurch gekennzeichnet, dass** das Verfahren einen Justiervorgang umfasst, mit dem der Lichtsender (25) und der Lichtempfänger (26) relativ zueinander justiert werden, indem der erste Verstellantrieb (23) und/oder der zweite Verstellantrieb (24) betätigt wird/werden.

12. Verfahren nach Anspruch 11, **dadurch gekennzeichnet, dass** der Justiervorgang in Abhängigkeit des vom Lichtempfänger (26) detektierten Schattens der Werkzeugspitze (4), insbesondere in Abhängigkeit der Position der Werkzeugspitze (4) innerhalb des Lichtfeldes (7), erfolgt.

13. Verfahren nach Anspruch 11 oder 12, **dadurch gekennzeichnet, dass** das Lichtfeld (7), vorzugsweise in zumindest einem seiner Randbereiche, ein in Richtung der Verstellbewegung der ersten Halterung (21) veränderliches Muster (14) aufweist, und dass der Justiervorgang in Abhängigkeit der Relativposition des vom Lichtempfänger (26) detektierten Schattens der Werkzeugspitze (4) relativ zu dem vom Lichtempfänger (26) detektierten Muster (14) erfolgt.

14. Verfahren nach einem der vorhergehenden Ansprüche, **dadurch gekennzeichnet, dass** die erste Werkzeughalterung (11) eine Oberwerkzeughalterung und die zweite Werkzeughalterung (12) eine Unterwerkzeughalterung ist
und/oder dass die erste Plattform (1) relativ zur zweiten Plattform (2) bewegbar ist.

15. Biegepresse (10) zum Biegen eines Werkstückes (19), insbesondere Abkantpresse, umfassend
- eine erste Plattform (1) mit einer ersten Werkzeughalterung (11) und eine zweite Plattform (2) mit einer zweiten Werkzeughalterung (12), wobei eine der Plattformen (1) zur Ausführung einer Arbeitsbewegung relativ zur anderen Plattform (2) bewegbar ist,
- eine Sicherheitseinrichtung (20) zum Erzeugen einer zwischen den Werkzeughalterungen (11, 12) quer zur Arbeitsbewegung der bewegbaren Plattform (1) verlaufenden Lichtschranke (27), insbesondere Laserlichtschranke, welche im Querschnitt ein Lichtfeld (7) bildet, wobei die Sicherheitseinrichtung (20) eine erste Halterung (21), die einen Lichtsender (25) zum Erzeugen der Lichtschranke (27) trägt, und eine zweite Halterung (22), die einen Lichtempfänger (26) zum Empfangen des Lichtes der Lichtschranke (27) trägt, aufweist, und wobei die erste Halterung (21) an einer ersten Seite der ersten Plattform (1) angeordnet ist und durch einen ersten Verstellantrieb (23) relativ zur ersten Plattform (1) derart verstellbar ist, dass die Position der Lichtschranke (27) relativ zur ersten Werkzeughalterung (11) in Richtung der Arbeitsbewegung der bewegbaren Plattform (1) veränderbar ist,
- eine Steuereinrichtung (9), die mit dem ersten Verstellantrieb (23) verbunden ist,
**dadurch gekennzeichnet, dass** die Biegepresse (10) zur Durchführung eines Verfahrens nach einem der vorangegangenen Ansprüche ausgebildet ist, wobei die Steuereinrichtung (9) konfiguriert ist, das Verfahren nach einem der vorangegangenen Ansprüchen zu steuern, insbesondere durch Auswerten und/oder Verarbeiten der vom Lichtempfänger (26) aufgenommen oder ausgewerteten Daten und/oder durch Verstellen des ersten Verstellantriebes (23) und/oder des zweiten Verstellantriebes (24).

## Claims

1. A method for operating a bending press (10), in particular a press brake, wherein the bending press (10) comprises
- a first platform (1) with a first tool mount (11) and a second platform (2) with a second tool mount (12), wherein one of the platforms (1) is movable relative to the other platform (2) for performing a working movement,
- a safety device (20) for creating a light barrier (27), in particular laser light barrier, extending between the tool mounts (11, 12) transversely to the working movement of the movable platform (1), which light barrier (27), in a cross-section, forms a light field (7), wherein the safety device (20) has a first mount (21), which carries a light emitter (25) for creating the light barrier (27), and a second mount (22), which carries a light receiver (26) for receiving the light of the light barrier (27), and wherein the first mount (21) is arranged on a first side of the first platform (1) and is adjustable relative to the first platform (1) by a first adjustment drive (23), such that the position of the light barrier (27) relative to the first tool mount (11) can be changed in the direction of the working movement of the movable platform (1),
- a controller (9) that is connected to the first adjustment drive (23),
**characterized in that**
before a bending operation or a series of bending operations, the controller (9) brings the first mount (21) into a working position by controlling the first adjustment drive (23), in which working position the tool tip (4) of a bending tool (8) held by the first tool mount (11) lies within the light field (7) formed by the light barrier (27), preferably in a predefined first region (5) of the light field (7),
and that the controller (9) brings the first mount (21) into the working position depending on the shadow of the tool tip (4) detected by the light receiver (26).

2. The method according to claim 1, **characterized in that** the light receiver is an image receiver, preferably a camera, wherein preferably the shadow recognition and shadow association is performed by means of pixel-wise evaluation of the captured image.

3. The method according to claim 1 or 2, **characterized in that**, in the working position of the first mount (21), the distance between the tool tip (4) and the light field's (7) edge (3) opposite the tool tip (4) is at least a third, preferably at least half, of the expansion of the light field (7) in the direction, in which the working movement of the movable platform (1) takes place.

4. The method according to one of the preceding claims, **characterized in that** the position of the tool tip (4) within the light field (7) or the position of the light barrier (27) is determined based on the shadow of the tool tip (4) detected by the light receiver (26).

5. The method according to one of the preceding claims, **characterized in that** the first mount is (21) adjusted depending on the determined position of the tool tip (4) within the light field (7) or the determined position of the light barrier (27), until the tool tip (4) comes to lie in a target position or a target region within the light field (7), preferably in a predefined first region (5).

6. The method according to one of the preceding claims, **characterized in that** the first mount is (21) adjusted depending on the determined position of the tool tip (4) within the light field (7) or the determined position of the light barrier (27) if the tool tip (4) is outside the predefined first region (5) and inside a predefined second region (6) within the light field (7), wherein the predefined first region (5) is inside the predefined second region (6), and that the adjustment of the first mount (21) takes place until the tool tip (4) comes to lie in the predefined first region (5).

7. The method according to one of the preceding claims, **characterized in that** an information and/or a warning is output at a user interface (13) of the bending press (10) and/or the adjusting operation is interrupted if no shadow of the tool tip (4) is detected or if the tool tip (4) is outside a predefined second region (6) within the light field (7), wherein the predefined first region (5) is inside the predefined second region (6).

8. The method according to one of the preceding claims, **characterized in that** the second mount (22) is arranged on a second side of the platform (1) opposite the first side and is adjustable relative to the first platform (1) by means of a second adjustment drive (24), wherein the controller (9) is connected to the second adjustment drive (24).

9. The method according to one of the preceding claims, **characterized in that** the second mount (22) with the light receiver (26) is adjusted to the same extent as the first mount (21) with the light emitter (25).

10. The method according to one of preceding claims, **characterized in that** the first adjustment drive (23) is actuatable independently of the second adjustment drive (24).

11. The method according to one of the preceding claims, **characterized in that** the method comprises an adjustment operation, in which the light emitter (25) and the light receiver (26) are adjusted relative to one another by means of actuating the first adjustment drive (23) and/or the second adjustment drive (24).

12. The method according to claim 11, **characterized in that** the adjustment operation is carried out depending on the shadow of the tool tip (4) detected by the light receiver (26), in particular depending on the position of the tool tip (4) within the light field (7).

13. The method according to claim 11 or 12, **characterized in that** the light field (7), preferably in at least one of its edge regions, has a pattern (14) variable in the direction of the adjustment movement of the first mount (21), and that the adjustment operation is carried out depending on the relative position of the shadow of the tool tip (4) detected by the light receiver (26) relative to the pattern (14) detected by the light receiver (26).

14. The method according to one of the preceding claims, **characterized in that** the first tool mount (11) is an upper tool mount and the second tool mount (12) is a lower tool mount, and/or that the first platform (1) is movable relative to the second platform (2).

15. A bending press (10) for bending a workpiece (19), in particular a press brake, comprising
- a first platform (1) with a first tool mount (11) and a second platform (2) with a second tool mount (12), wherein one of the platforms (1) is movable relative to the other platform (2) for performing a working movement,
- a safety device (20) for creating a light barrier (27), in particular laser light barrier, extending between the tool mounts (11, 12) transversely to the working movement of the movable platform (1), which light barrier (27), in a cross-section, forms a light field (7), wherein the safety device (20) has a first mount (21), which carries a light emitter (25) for creating the light barrier (27), and a second mount (22), which carries a light receiver (26) for receiving the light of the light barrier (27), and wherein the first mount (21) is arranged on a first side of the first platform (1) and is adjustable relative to the first platform (1) by a first adjustment drive (23), such that the position of the light barrier (27) relative to the first tool mount (11) can be changed in the direction of the working movement of the movable platform (1),
- a controller (9) that is connected to the first adjustment drive (23), **characterized in that** the bending press (10) is designed for carrying out a method according to one of the preceding claims, wherein the controller (9) is configured to control the method according to one of the preceding claims, in particular by evaluating and/or processing the data recorded or evaluated by the light receiver (26) and/or by adjusting the first adjustment drive (23) and/or the second adjustment drive (24).

## Revendications

1. Procédé de fonctionnement d'une presse plieuse (10), plus particulièrement d'une presse de cintrage, dans lequel la presse plieuse (10) comprend
- une première plateforme (1) avec un premier porte-outil (11) et une deuxième plateforme (2) avec un deuxième porte-outil (12), dans lequel une des plateformes (1) est mobile par rapport à l'autre plateforme (2) pour l'exécution d'un mouvement de travail,
- un dispositif de sécurité (20) pour la production d'une barrière photoélectrique (27) s'étendant entre les porte-outils (11, 12) transversalement par rapport au mouvement de travail de la plateforme mobile (1), plus particulièrement une barrière photoélectrique à laser, qui forme, en section transversale, un champ lumineux (7), dans lequel le dispositif de sécurité (20) comprend un premier support (21) qui supporte un émetteur de lumière (25) pour la production de la barrière photoélectrique (27) et un deuxième support (22) qui supporte un récepteur de lumière (26) pour la réception de la lumière de la barrière photoélectrique (27), et dans lequel le premier support (21) est disposé sur un premier côté de la première plateforme (1) et peut être déplacé, à l'aide d'un premier entraînement de déplacement (23), par rapport à la première plateforme (1) de façon à ce que la position de la barrière photoélectrique (27) par rapport au premier porte-outil (11) soit variable dans la direction du mouvement de travail de la plateforme mobile (1),
- un dispositif de commande (9) qui est relié avec le premier entraînement de déplacement (23),
**caractérisé en ce que**
le dispositif de commande (9) amène, avant un processus de pliage ou une série de processus de pliage, le premier support (21), grâce au contrôle du premier entraînement de déplacement (23), dans une position de travail dans laquelle la pointe de l'outil (4) d'un outil de pliage (8) maintenu par le premier porte-outil (11) se trouve à l'intérieur du champ lumineux (7) formé par la barrière photoélectrique (27), de préférence dans une première zone (5) prédéterminé du champ lumineux (7) et **en ce que** le dispositif de commande (9) amène le premier support (21) en position de travail en fonction de l'ombre de la pointe d'outil (4) détectée par le récepteur de lumière (26).

2. Procédé selon la revendication 1, **caractérisé en ce que** le récepteur de lumière est un récepteur d'image, de préférence une caméra, dans lequel, de préférence, la détection et la mise en correspondance des ombres a lieu au moyen d'une analyse par pixels de l'image enregistrée.

3. Procédé selon la revendication 1 ou 2, **caractérisé en ce que**, dans la position de travail du premier support (21), la distance entre la pointe de l'outil (4) et le bord (3) du champ lumineux (7) opposé à la pointe de l'outil (4) représente au moins un tiers, de préférence au moins la moitié de l'extension du champ lumineux (7) dans la direction dans laquelle a lieu le mouvement de travail de la plateforme mobile (1).

4. Procédé selon l'une des revendications précédentes, **caractérisé en ce que**, à l'aide de l'ombre de la pointe d'outil (4) détectée par le récepteur de lumière (26), la position de la pointe de l'outil (4) à l'intérieur du champ lumineux (7) ou la position de la barrière photoélectrique (27) est déterminée.

5. Procédé selon l'une des revendications précédentes, **caractérisé en ce que**, en fonction de la position déterminée de la pointe de l'outil (4) à l'intérieur du champ lumineux (7) ou de la position déterminée de la barrière photoélectrique (27), le premier support (21) est déplacé jusqu'à ce que la pointe de l'outil (4) se trouve dans une position de consigne ou une zone de consigne à l'intérieur du champ lumineux (7), de préférence dans une première zone prédéterminée (5).

6. Procédé selon l'une des revendications précédentes, **caractérisé en ce que**, en fonction de la position déterminée de la pointe de l'outil (4) à l'intérieur du champ lumineux (7) ou de la position déterminée de la barrière photoélectrique (27), le premier support (21) est déplacé lorsque la pointe de l'outil (4) se trouve à l'extérieur de la première zone prédéterminée (5) et à l'intérieur d'une deuxième zone prédéterminée (6) à l'intérieur du champ lumineux (7), dans lequel la première zone prédéterminée (5) se trouve à l'intérieur de la deuxième zone prédéterminée (6) et **en ce que** le déplacement du premier support (21) a lieu jusqu'à ce que la pointe de l'outil (4) se trouve dans la première zone prédéterminée (5).

7. Procédé selon l'une des revendications précédentes, **caractérisé en ce que**, au niveau d'une interface utilisateur (13) de la presse plieuse (10), une information et/ou un avertissement est émis et/ou le processus de réglage est interrompu lorsqu'aucune ombre de la pointe de l'outil (4) n'est détectée ou lorsque la pointe de l'outil(4) se trouve à l'extérieur d'une deuxième zone prédéterminée (6) à l'intérieur du champ lumineux (7), dans lequel la première zone prédéterminée (5) se trouve à l'intérieur de la deuxième zone prédéterminée (6).

8. Procédé selon l'une des revendications précédentes, **caractérisé en ce que** le deuxième support (22) est disposé sur un deuxième côté, opposé au premier côté, de la première plateforme (1), et peut être déplacé à l'aide d'un deuxième entraînement de déplacement (24) par rapport à la première plateforme (1), dans lequel le dispositif de commande (9) est relié avec le deuxième entraînement de déplacement (24).

9. Procédé selon l'une des revendications précédentes, **caractérisé en ce que** le deuxième support (22) avec le récepteur de lumière (26) est déplacé de la même distance que le premier support (21) avec l'émetteur de lumière (25).

10. Procédé selon l'une des revendications précédentes, **caractérisé en ce que** le premier entraînement de déplacement (23) peut être actionné indépendamment du deuxième entraînement de déplacement (24).

11. Procédé selon l'une des revendications précédentes, **caractérisé en ce que** le procédé comprend un processus d'ajustement avec lequel l'émetteur de lumière (25) et le récepteur de lumière (26) sont ajustés l'un par rapport à l'autre, en actionnant le premier entraînement de déplacement (23) et/ou le deuxième entraînement de déplacement (24).

12. Procédé selon la revendication 11, **caractérisé en ce que** le processus d'ajustement a lieu en fonction de l'ombre de la pointe d'outil (4) détectée par le récepteur de lumière (26), plus particulièrement en fonction de la position de la pointe de l'outil (4) à l'intérieur du champ lumineux (7).

13. Procédé selon la revendication 11 ou 12, **caractérisé en ce que** le champ lumineux (7), de préférence dans au moins une de ses zones de bord, comprend un motif (14) variable dans la direction du mouvement de déplacement du premier support (21) et **en ce que** le processus d'ajustement a lieu en fonction de la position relative de l'ombre de la pointe de l'outil (4) détectée par le récepteur de lumière (26) par rapport au motif (14) détecté par le récepteur de lumière (26).

14. Procédé selon l'une des revendications précédentes, **caractérisé en ce que** le premier porte-outil (11) est un porte-outil supérieur et le deuxième porte-outil (12) est un porte-outil inférieur
et/ou **en ce que** la première plateforme (1) est mobile par rapport à la deuxième plateforme (2).

15. Presse plieuse (10) pour le pliage d'une pièce (19), plus particulièrement presse de cintrage, comprenant
- une première plateforme (1) avec un premier porte-outil (11) et une deuxième plateforme (2) avec un deuxième porte-outil (12), dans lequel une des plateformes (1) est mobile par rapport à l'autre plateforme (2) pour l'exécution d'un mouvement de travail,
- un dispositif de sécurité (20) pour la production d'une barrière photoélectrique (27) s'étendant entre les porte-outils (11, 12) transversalement par rapport au mouvement de travail de la plateforme mobile (1), plus particulièrement une barrière photoélectrique à laser, qui forme, en section transversale, un champ lumineux (7), dans lequel le dispositif de sécurité (20) comprend un premier support (21) qui supporte un émetteur de lumière (25) pour la production de la barrière photoélectrique (27) et un deuxième support (22) qui supporte un récepteur de lumière (26) pour la réception de la lumière de la barrière photoélectrique (27), et dans lequel le premier support (21) est disposé sur un premier côté de la première plateforme (1) et peut être déplacé, à l'aide d'un premier entraînement de déplacement (23), par rapport à la première plateforme (1) de façon à ce que la position de la barrière photoélectrique (27) par rapport au premier porte-outil (11) soit variable dans la direction du mouvement de travail de la plateforme mobile (1),
- un dispositif de commande (9) qui est relié avec le premier entraînement de déplacement (23),
**caractérisée en ce que** la presse plieuse (10) est conçue pour l'exécution d'un procédé selon l'une des revendications précédentes, dans lequel le dispositif de commande (9) est configuré pour contrôler le procédé selon l'une des revendications précédentes, plus particulièrement par l'analyse et/ou le traitement des données enregistrées ou analysées par le récepteur de lumière (26) et/ou par le déplacement du premier entraînement de déplacement (23) et/ou du deuxième entraînement de déplacement (24).
